# EUROPÄISCHE PATENTANMELDUNG

(11) **EP 2 468 554 A2**
(43) Veröffentlichungstag der Anmeldung: **27.06.2012**
(21) Anmeldenummer: 11009754.0
(22) Anmeldetag: 10.12.2011
(51) Int. Cl.: B60K 15/035

(54) **Einrichtung zur Entlüftung und Belüftung eines Kraftstofftanks**

(30) Priorität: 21.12.2010 DE 102010055311
(71) Anmelder: AUDI AG, 85045 Ingolstadt (DE)
(72) Erfinder: Hagen, Harald, 95473 Creussen (DE)
(74) Vertreter: Lehle, Josef

(57) **Zusammenfassung**

Die Erfindung betrifft eine Einrichtung zur Entlüftung und Belüftung eines Kraftstofftanks (1), insbesondere eines Kraftstofftanks einer Brennkraftmaschine eines Kraftfahrzeugs, mit einem Aktivkohlefilter (7), einem steuerbaren Tankabsperrventil (8) und zwei Tankdruckregelventilen (9, 10), von denen eines im Falle eines Überdrucks im Kraftstofftank (1) und eines im Falle eines Unterdrucks im Kraftstofftank (1) öffnet. Um die Menge der aus dem Tankabsperrventil (8) und den Tankdruckregelventilen (9, 10) in die Umgebung entweichenden flüchtigen Kohlenwasserstoffe zu verringern, wird erfindungsgemäß vorgeschlagen, dass mindestens die beiden Tankdruckregelventile (9, 10) und bevorzugt sowohl die beiden Tankdruckregelventile (9, 10) und das Tankabsperrventil (8) im Inneren des Kraftstofftanks (1) angeordnet sind.

## Beschreibung

Die Erfindung betrifft eine Einrichtung zur Entlüftung und Belüftung eines Kraftstofftanks gemäß dem Oberbegriff des Anspruchs 1.

Moderne Kraftfahrzeuge sind mit einer Einrichtung zur Entlüftung und Belüftung ihres Kraftstofftanks ausgestattet. Diese Einrichtung erlaubt zum einen beim Betanken des Kraftfahrzeugs ein Entweichen eines vom Kraftstoff verdrängten Gasgemischs aus dem Inneren des Kraftstofftanks und verhindert zum anderen, dass sich bei einem größeren Anstieg oder Abfall der Umgebungstemperaturen aufgrund der durch den Temperaturanstieg hervorgerufenen Verdunstung von Kraftstoff bzw. aufgrund der durch den Temperaturabfall hervorgerufenen Kondensation von Kraftstoffdämpfen im Inneren des druckdicht verschlossenen Kraftstofftanks ein unerwünschter Überdruck bzw. Unterdruck aufbauen kann. Die Einrichtung umfasst in der Regel ein steuerbares Tankabsperrventil, wie beispielsweise ein Elektromagnetventil, zwei mechanische Tankdruckregelventile in Form eines Überdruckventils und eines Unterdruckventils, die zumeist als Bypassventile des Tankabsperrventils ausgebildet sind, sowie einen Aktivkohlefilter, der zwischen den Ventilen und der Umgebung angeordnet ist und bei der Entlüftung des Kraftstofftanks einen unerwünschten Austritt von Kohlenwasserstoffen aus dem Kraftstofftank in die Atmosphäre oder Umgebung verhindern soll. Das Tankabsperrventil ist normalerweise geschlossen und wird während des Betankens des Kraftstofftanks geöffnet, um das vom Kraftstoff verdrängte Gasgemisch aus dem Gas- oder Kopfraum des Kraftstofftanks abzuführen. Außerdem wird das Tankabsperrventil während des Betriebs der Brennkraftmaschine gewöhnlich unter der Steuerung eines Motorsteuergeräts der Brennkraftmaschine geöffnet, wenn ein von einem Tankdrucksensor gemessener Druck im Kraftstofftank einen einstellbaren Überdruck-Schwellenwert übersteigt oder einen einstellbaren Unterdruck-Schwellenwert unterschreitet, um eine übermäßige Beanspruchung des Kraftstofftanks zu vermeiden. Da im Stillstand der Brennkraftmaschine in der Regel keine Steuerung des Tankabsperrventils möglich ist, erfolgt in diesem Betriebszustand die Begrenzung des Drucks im Inneren des Kraftstofftanks mit Hilfe der beiden Tankdruckregelventile. Dabei öffnet sich das Überdruckventil selbsttätig, wenn zum Beispiel bei einem Anstieg der Umgebungstemperaturen oder während einer Nachheizphase nach dem Abstellen der Brennkraftmaschine aufgrund einer Verdunstung von Kraftstoff im Inneren des Kraftstofftanks der Druck im Kraftstofftank auf den über dem Überdruck-Schwellenwert liegenden Öffnungsdruck des Überdruckventils ansteigt, während sich das Unterdruckventil selbsttätig öffnet, wenn zum Beispiel bei sinkenden Umgebungstemperaturen Kraftstoff im Inneren des Kraftstofftanks kondensiert und infolgedessen der Druck im Kraftstofftank auf einen unter dem Unterdruck-Schwellenwert liegenden Öffnungsdruck des Unterdruckventils absinkt. Das beim Entlüften des Kraftstofftanks aus diesem ausströmende Gasgemisch wird durch den Aktivkohlefilter geleitet, um die im Gasgemisch enthaltenen flüchtigen Kohlenwasserstoffe (HC) zu adsorbieren, so dass nur gereinigte Luft in die Umgebung gelangt.

Bei bekannten Einrichtungen dieser Art sind das Tankabsperrventil und die beiden Tankdruckregelventile gewöhnlich zu einer Ventileinheit oder Ventilbaugruppe zusammengefasst, die wegen einer besseren Zugänglichkeit ebenso wie der Aktivkohlefilter außerhalb des Kraftstofftanks angeordnet ist. Die Ventileinheit oder Ventilbaugruppe weist in der Regel ein Gehäuse mit einem Tankanschluss und einem Filteranschluss auf, die mit einer zum Kraftstofftank bzw. zum Aktivkohlefilter führenden Leitung verbunden sind. Das Gehäuse der Ventileinheit oder Ventilbaugruppe ist zumeist aus mehreren Teilen zusammengesetzt, so dass trotz einer Abdichtung der Trennfugen keine hundertprozentige Dichtigkeit sichergestellt werden kann. Entsprechendes gilt auch für die Verbindungen zwischen dem Tankanschluss und dem Filteranschluss des Gehäuses und der zum Kraftstofftank bzw. zum Aktivkohlefilter führenden Leitung, so dass ein Entweichen von kleineren Mengen flüchtiger Kohlenwasserstoffe (HC) aus der Ventileinheit oder Ventilbaugruppe nicht sicher verhindert werden kann. Im Falle einer Trennung des Tankabsperrventils und der beiden Tankdruckregelventile wäre die Menge der aus den Ventilen entweichenden flüchtigen Kohlenwasserstoffe (HC) aufgrund der größeren Anzahl von Trennfugen und Verbindungen noch größer.

Da die gesetzlichen Vorschriften zur Vermeidung von Kraftstoff-Emissionen in die Umgebung immer weiter verschärft werden, ist abzusehen, dass auch das Entweichen von kleineren Mengen flüchtiger Kohlenwasserstoffe (HC) aus Ventilen von Einrichtungen der eingangs genannten Art in die Umgebung in der Zukunft nicht mehr zulässig sein wird.

Ausgehend hiervon liegt der Erfindung die Aufgabe zugrunde, eine Einrichtung der eingangs genannten Art dahingehend zu verbessern, dass die Menge der aus ihren Ventilen in die Umgebung entweichenden flüchtigen Kohlenwasserstoffe verringert werden kann.

Diese Aufgabe wird erfindungsgemäß dadurch gelöst, dass mindestens die beiden Tankdruckregelventile und bevorzugt sowohl die beiden Tankdruckregelventile und das Tankabsperrventil im Inneren des Kraftstofftanks angeordnet sind. Der Erfindung liegt der Gedanke zugrunde, dass durch die Verlegung der Ventile ins Innere des Kraftstofftanks die aus diesen Ventilen entweichenden flüchtigen Kohlenwasserstoffe in den geschlossenen Kraftstofftank und nicht in die Umgebung gelangen. Dabei brauchen keine neuen Ventile entwickelt werden, da die existierenden Ventile bereits aus Materialien bestehen, die für Kraftstoffdämpfe unempfindlich sind.

Ein erste Erfindungsalternative sieht vor, das Tankabsperrventil und die beiden Tankdruckregelventile nicht wie bisher zu einer einzigen Ventileinheit oder Ventilbaugruppe zusammenzufassen, sondern das Tankabsperrventil einerseits und die beiden Tandruckregelventile andererseits getrennt voneinander zu montieren, und zwar das Tankabsperrventil außerhalb des Kraftstofftanks und die beiden Tankdruckregelventile innerhalb des Kraftstofftanks.

In diesem Fall ist das außerhalb des Kraftstofftanks befindliche Tankabsperrventil zweckmäßig wie bisher durch eine außerhalb des Kraftstofftanks verlaufende Leitung mit dem ebenfalls außerhalb des Kraftstofftanks befindlichen Aktivkohlefilter verbunden, während die beiden Tankdruckregelventile bevorzugt durch eine aus dem Kraftstofftank heraus führende Leitung mit der vom Tankabsperrventil zum Aktivkohlefilter führenden Leitung verbunden sind, oder alternativ auch direkt mit dem Aktivkohlefilter, zum Beispiel wenn dieser unmittelbar am Kraftstofftank angebracht ist.

Die beiden im Inneren des Kraftstofftanks angeordneten Tankdruckregelventile sind zweckmäßig in einem Gas- oder Kopfraum des Kraftstofftanks angeordnet, der bei der Betankung des Kraftstofftanks nicht mit Kraftstoff gefüllt wird. Vorteilhaft kommunizieren die beiden Tankdruckregelventile jedoch nicht direkt mit dem Gas- oder Kopfraum, sondern über eine so genannte Flüssigkeitsfalle, mit der flüssiger Kraftstoff, wie Kondensat, vor dem Erreichen des geöffneten Überdruckventils aus dem durch das Überdruckventil ausströmenden Gasgemisch abgeschieden werden kann, so dass sich flüssiger Kraftstoff weder im Überdruckventil ansammeln noch bis in den Aktivkohlefilter mitgerissen werden kann.

Die beiden Tankdruckregelventile sind vorteilhaft in Parallelschaltung zu einer Ventileinheit oder Ventilbaugruppe mit einem gemeinsamen Einlass oder Tankanschluss und einem gemeinsamen Auslass oder Filteranschluss zusammengefasst, wobei zweckmäßig der Einlass mit der Flüssigkeitsfalle und der Auslass mit der aus dem Tank heraus führenden Leitung verbunden ist. Bei den beiden Tankdruckregelventilen handelt es sich vorzugsweise um rein mechanische Ventile, die jeweils zwei durch eine Membran getrennte Kammern aufweisen, wobei die Kammern jeweils paarweise durch den Einlass mit der Flüssigkeitsfalle bzw. durch den Auslass mit der aus dem Kraftstofftank heraus führenden Leitung kommunizieren.

Eine weitere bevorzugte Erfindungsalternative sieht vor, dass der Duck im Kraftstofftank nicht nur wie bisher im Stillstand der der Brennkraftmaschine sondern auch während des Betriebs der Brennkraftmaschine ausschließlich mittels der beiden Tankdruckregelventile gesteuert wird, während das Tankabsperrventil im Betrieb der Brennkraftmaschine geschlossen bleibt und nur beim Betanken des Kraftstofftanks geöffnet wird. Das außerhalb des Kraftstofftanks angeordnete Tankabsperrventil ist vorteilhaft durch eine Leitung mit dem Gas- oder Kopfraum des Kraftstofftanks oder mit einer mit dem Gas- oder Kopfraum kommunizierenden Flüssigkeitsfalle verbunden, wobei diese Leitung vorzugsweise außerhalb des Kraftstofftanks verläuft und durch einen Verschlussdeckel einer Öffnung an der Oberseite des Kraftstofftanks ins Innere des Gas- oder Kopfraums bzw. der Flüssigkeitsfalle mündet. Da das Kraftfahrzeug beim Betanken stets auf einer ebenen Fläche steht, kann in diesem Fall auf mindestens ein Roll-Over-Ventil zwischen dem Gas- oder Kopfraum des Kraftstofftanks und der Leitung verzichtet werden.

Alternativ ist es jedoch auch möglich, den Druck im Kraftstofftank während des Betriebs der Brennkraftmaschine wie bisher mit Hilfe des Tankabsperrventils zu steuern, indem dieses getaktet geöffnet wird, wenn der von einem Tankdrucksensor gemessene Druck im Kraftstofftank einen vorbestimmten Überdruck-Schwellenwert übersteigt oder einen vorbestimmten Unterdruck-Schwellenwert unterschreitet. Die Ansteuerung des Tankabsperrventils erfolgt in beiden Fällen durch eine Steuerung, vorzugsweise das Motorsteuergerät der Brennkraftmaschine. Da in diesem Fall jedoch nicht ausgeschlossen werden kann, dass das Tankabsperrventil bei einem Unfall des Kraftfahrzeugs gerade geöffnet ist, ist mindestens ein Roll-Over-Ventil zwischen dem Gas- oder Kopfraum des Kraftstofftanks und der Leitung erforderlich.

Ein bevorzugte zweite Erfindungsalternative sieht vor, sowohl das Tankabsperrventil und die beiden Tankdruckregelventile innerhalb des Gas- oder Kopfraums des Kraftstofftanks zu montieren und sie vorzugsweise zu einer einzigen Ventileinheit oder Ventilbaugruppe zusammenzufassen. Diese Erfindungsalternative hat gegenüber der zuvor beschriebenen ersten Erfindungsalternative den Vorteil, dass auch aus dem Tankabsperrventil entweichende Kraftstoffdämpfe nicht in die Umgebung gelangen können, erfordert jedoch einen etwas größeren Platzbedarf im Inneren des Kraftstofftanks. Vorteilhaft kommuniziert auch hier die Ventileinheit oder Ventilbaugruppe aus den beiden Tankdruckregelventilen und dem Tankabsperrventil nicht direkt mit dem Gas- oder Kopfraum, sondern über eine Flüssigkeitsfalle, mit der aus einem aus dem Gas- oder Kopfraum durch die Ventileinheit oder Ventilbaugruppe zum Aktivkohlefilter strömenden Gasgemisch flüssigen Kraftstoff vor dem Erreichen der Ventileinheit oder Ventilbaugruppe bzw. des Aktivkohlefilters abgeschieden werden kann, so dass sich einerseits innerhalb der Ventileinheit oder Ventilbaugruppe keine Ansammlung von Kondensat bilden kann und andererseits flüssiger Kraftstoff nicht in den Aktivkohlefilter mitgerissen wird.

Der grundsätzliche Aufbau der mechanischen Tankdruckregelventile ist ungeachtet der Lage des Tankabsperrventils derselbe: Jedes Tankdruckregelventil umschließt vorteilhaft zwei durch eine Membran getrennte Kammern, von denen eine mit dem Tankanschluss und eine mit dem Filteranschluss kommuniziert. Die Membran weist eine Öffnung auf und wird von einer Feder um die Öffnung herum gegen das freie Ende eines Rohrstutzens angepresst, der eine der Kammern durchsetzt und durch die Öffnung in die andere Kammer mündet, in der sich die Feder befindet. Die Verbindung zwischen den beiden Kammern und dem Tankanschluss bzw. dem Filteranschluss ist beim Überdruckventil und beim Unterdruckventil jeweils umgekehrt: Beim Überdruckventil kommuniziert die den Rohrstutzen umgebende Kammer mit dem Kraftstofftank und die mit der Feder be- , stückte Kammer mit dem Aktivkohlefilter. Wenn sich im Kraftstofftank ein Überdruck einstellt, der den Öffnungsdruck des Überdruckventils übersteigt, wird die Membran vom Überdruck entgegen der Kraft der Feder vom Rohrstutzen abgehoben, so dass die beiden Kammern miteinander verbunden werden. Beim Unterdruckventil kommuniziert die mit der Feder bestückte Kammer mit dem Kraftstofftank und die den Rohrstutzen umgebende Kammer mit dem Aktivkohlefilter. Wenn sich im Kraftstofftank ein Unterdruck einstellt, der den Öffnungsdruck des Unterdruckventils übersteigt, wird die Membran vom Unterdruck entgegen der Kraft der Feder vom Rohrstutzen abgehoben, so dass die beiden Kammern ebenfalls miteinander verbunden werden.

Im Folgenden wird die Erfindung anhand von einigen in der Zeichnung dargestellten Ausführungsbeispielen näher erläutert. Es zeigen
Fig. 1 eine schematische Ansicht eines Kraftstofftanks mit einer Be- und Entlüftungseinrichtung, die ein außerhalb des Kraftstofftanks befindliches Tankabsperrventil und zwei innerhalb des Kraftstofftanks befindliche Tankdruckregelventile umfasst;
Fig. 2 eine schematische Ansicht des Kraftstofftanks mit einer modifizierten Be- und Entlüftungseinrichtung, die ebenfalls ein außerhalb des Kraftstofftanks befindliches Tankabsperrventil und zwei innerhalb des Kraftstofftanks befindliche Tankdruckregelventile umfasst;
Fig. 3 eine perspektivische Ansicht des Tankabsperrventils
Fig. 4 eine Längsschnittansicht der beiden Tankdruckregelventile;
Fig. 5 eine schematische Ansicht des Kraftstofftanks mit einer weiteren modifizierten Be- und Entlüftungseinrichtung, bei der sich sowohl das Tankabsperrventil als auch die beiden Tankdruckregelventile innerhalb des Kraftstofftanks befinden.

Bei dem in der Zeichnung dargestellten Kraftstofftank 1 eines Kraftfahrzeugs handelt es sich um einen druckdichten Kraftstofftank 1, der durch Blasformen aus einem gas- und flüssigkeitsdichten Sandwichmaterial hergestellt worden ist. Zum Betanken weist der Krafftstofftank 1 einen durch einen Tankdeckel 2 verschließbaren Einfüllstutzen 3 auf. In der Nähe eines Bodens 4 des Kraftstofftanks 1 befindet sich eine Fördereinheit 5 mit einer im Kraftstoff untergetauchten Kraftstoffpumpe 6. Der Kraftstofftank 1 ist mit einer Be- und Entlüftungseinrichtung ausgestattet, die einen Aktivkohlefilter 7, ein Tankabsperrventil 8, zwei Tankdruckregelventile 9, 10, eine Flüssigkeitsfalle 11 und ggf. ein oder mehrere Roll-Over-Ventile 12, 13, 14 umfasst.

Der außerhalb des Kraftstofftanks 1 angeordnete Aktivkohlefilter 7 verhindert, dass bei einer Entlüftung des Kraftstofftanks 1 flüchtige Kohlenwasserstoffe (HC) in die Umgebung gelangen, und enthält zu diesem Zweck eine Füllung aus Aktivkohle, die flüchtige Kohlenwasserstoffe (HC) absorbiert. Wenn der Aktivkohlefilter 7 mit flüchtigen Kohlenwasserstoffen beladen ist, wird er regeneriert, indem Umgebungsluft durch den Aktivkohlefilter 7 hindurch in einen Ansaugtrakt (nicht dargestellt) der Brennkraftmaschine angesaugt wird, um den Filter 7 zu spülen und die flüchtigen Kohlenwasserstoffe in den Brennräumen der Brennkraftmaschine zu verbrennen.

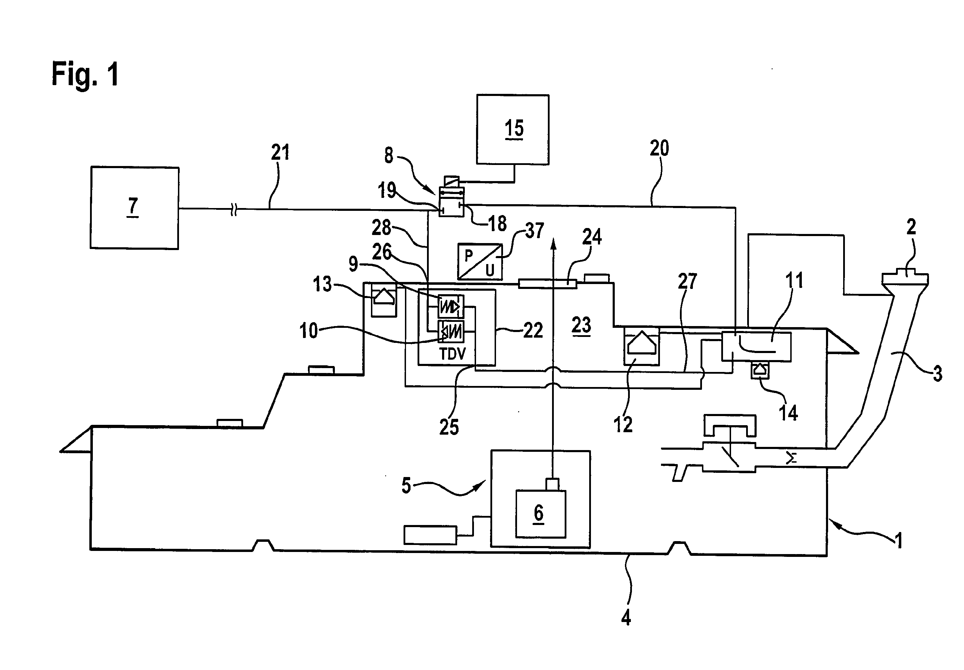

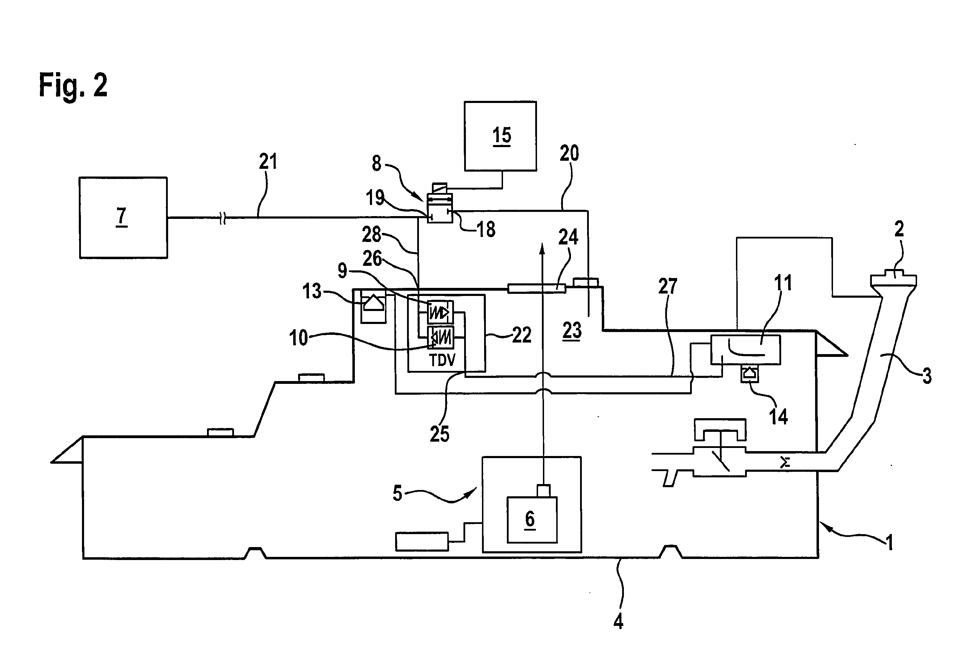

Bei den in Fig. 1 und 2 dargestellten Kraftstofftanks 1 ist das Tankabsperrventil 8 außerhalb des Kraftstofftanks 1 angeordnet, während die beiden Tankdruckregelventile 9 und 10 im Inneren des Kraftstofftanks 1 angeordnet sind.

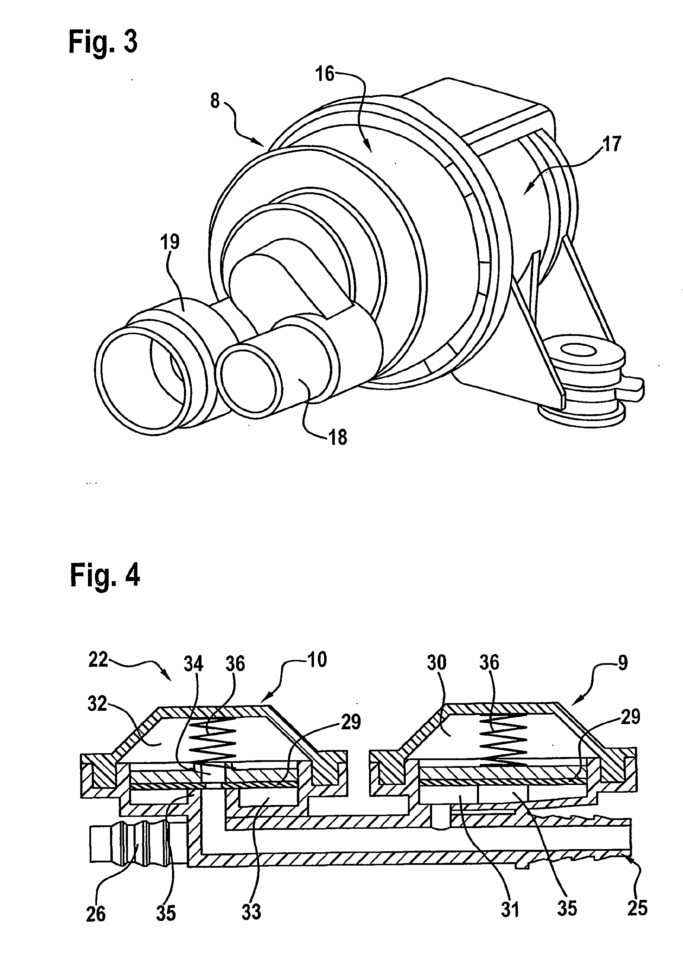

Bei dem Tankabsperrventil 8 handelt es sich um ein elektromagnetisches Ventil, das normalerweise geschlossen ist und unter der Steuerung eines Motorsteuergeräts 15 der Brennkraftmaschine getaktet geöffnet werden kann. Wie am besten in Fig. 3 dargestellt, umfasst das Tankabsperrventil 8 einen Ventilteil 16 und einen Ventilbetätigungsteil 17. Der Ventilteil 16 umfasst einen Ventilsitz und ein in Bezug zum Ventilsitz bewegliches Ventilglied (nicht dargestellt) sowie einem Tankanschluss 18 und einem Filteranschluss 19. Der Ventilbetätigungsteil 17 enthält eine Elektromagnetspule und einen auf das Ventilglied einwirkenden Anker (nicht dargestellt). Wenn die Elektromagnetspule erregt wird, hebt der Anker das Ventilglied vom Ventilsitz ab, woraufhin die beiden Anschlüsse 18, 19 miteinander kommunizieren. Wie am besten in Fig. 1 und 2 dargestellt, ist der Tankanschluss 18 durch eine außerhalb des Kraftstofftanks 1 verlaufende Leitung 20 mit dem Inneren des Kraftstofftanks 1 verbunden, während der Filteranschluss 19 durch eine ebenfalls außerhalb des Kraftstofftanks 1 verlaufende Leitung 21 mit dem Aktivkohlefilter 7 verbunden ist.

Bei den beiden Tankdruckregelventilen 9, 10 handelt es sich um ein rein mechanisches Überdruckventil 9 und ein rein mechanisches Unterdruckventil 10, die in Parallelschaltung zu einer Ventileinheit oder Ventilbaugruppe 22 zusammengefasst sind. Die Ventileinheit oder Ventilbaugruppe 22 ist in einem Kopf- oder Gasraum 23 des Kraftstofftanks 1 oberhalb des höchsten Kraftstoffspiegels untergebracht, wobei sie vorzugsweise an oder in der Nähe eines Verschlussdeckels 24 montiert ist, der eine Öffnung in der Oberseite des Kraftstofftanks 1 verschließt, so dass sie bei Bedarf leichter zugänglich ist. Die Ventileinheit oder Ventilbaugruppe 22 weist einen Tankanschluss 25 und einem Filteranschluss 26 auf. Vom Tankanschluss 25 aus erstreckt sich eine Leitung 27 durchs Innere des Kraftstofftanks 1 zur Flüssigkeitsfalle 11, während sich vom Filteranschluss 26 aus eine Leitung 28 bis zu der Leitung 21 erstreckt, in die sie hinter dem Tankabsperrventil 8 mündet.

Wie am besten in Fig. 4 dargestellt, weisen die beiden Tankdruckregelventile 9, 10 jeweils zwei durch eine Membran 29 getrennte Kammern 30, 31; 32, 33 auf, von denen eine 31; 32 mit dem Tankanschluss 25 und eine 30; 33 mit dem Filteranschluss 26 kommuniziert. Die Membran 29 jedes Ventils 9, 10 ist mit einer Öffnung 34 versehen und liegt bei geschlossenem Ventil 9, 10 um die Öffnung 34 herum auf einem zylindrischen Rohrstutzen 35 auf, durch den bei dem Unterdruckventil 10 die Unterdruckkammer 32 mit dem Kraftstofftank 1 und bei dem Überdruckventil 9 die andere Kammer 30 mit dem Aktivkohlefilter 7 kommuniziert. Die Membran 29 wird von einer Feder 36 gegen das freie obere Ende des Rohrstutzens 35 angepresst und sorgt dafür, dass die beiden Kammern 30, 31; 32, 33 bei geschlossenem Ventil 9, 10, d.h. normalerweise, nicht miteinander kommunizieren. Wenn der Druck im Kraftstofftank 1 unter einen Öffnungsdruck des Unterdruckventils 10 absinkt, wird die Membran 29 des Unterdruckventils 10 infolge des Unterdrucks in der durch die Öffnung 34 und den Rohrstutzen 35 mit dem Tankanschluss 25 kommunizierenden Unterdruckkammer 32 entgegen der Kraft der Feder 36 vom Rohrstutzen 35 abgehoben, wodurch die beiden Kammern 32, 33 unter Öffnen des Ventils 10 miteinander verbunden werden. Wenn der Druck im Kraftstofftank über einen Öffnungsdruck des Überdruckventils 9 ansteigt, wird die Membran 29 des Überdruckventils 9 durch den Druck in der Überdruckkammer 31 entgegen der Kraft der Feder 36 vom Rohrstutzen 35 abgehoben, wodurch die beiden Kammern 30, 31 ebenfalls unter Öffnen des Ventils 9 miteinander verbunden werden.

Die im Gas- oder Kopfraum des Kraftstofftanks 1 angeordnete, an die Oberseite des Kraftstofftanks 1 angrenzende Flüssigkeitsfalle 11 soll verhindern, dass beim Entlüften des Kraftstofftanks 1 von dem aus dem Inneren des Kraftstofftanks 1 ausströmenden Gasgemisch flüssiger Kraftstoff bis zum Aktivkohlefilter 7 mitgerissen wird. Die Roll-Over-Ventile,12, 13, 14 sollen einen Austritt von flüssigem Kraftstoff aus dem Kraftstofftank 1 verhindern, wenn das Kraftfahrzeug zum Beispiel bei einem Unfall eine übermäßige Schräglage aufweist oder sich überschlägt. Der Aufbau einer Flüssigkeitsfalle 11 1 oder von Roll-Over-Ventilen 12, 13, 14 ist an sich bekannt, und soll daher nicht näher beschrieben werden.

Bei dem in Fig. 1 dargestellten Kraftstofftank 1 ist das Tankabsperrventil 8 durch die Leitung 20 mit der Flüssigkeitsfalle 11 verbunden. Während des Betriebs der Brennkraftmaschine wird das Tankabsperrventil 8 dort vom Motorsteuergerät 15 der Brennkraftmaschine getaktet geöffnet, wenn ein von einem Tankdrucksensor 37 gemessener Druck im Kraftstofftank 1 einen einstellbaren Überdruck-Schwellenwert übersteigt oder einen einstellbaren Unterdruck-Schwellenwert unterschreitet. Demgegenüber wird im Stillstand der Brennkraftmaschine der Druck im Inneren des Kraftstofftanks 1 mit Hilfe der beiden Tankdruckregelventile 9, 10 in einem vorbestimmten Druckbereich gehalten, dessen Obergrenze etwas oberhalb des Überdruck-Schwellenwerts liegt, während seine Untergrenze etwas unterhalb des Unterdruck-Schwellenwert liegt. Der Öffnungsdruck des Überdruckventils 9 entspricht der Obergrenze des vorbestimmten Druckbereichs, so dass sich das Überdruckventil 9 selbsttätig öffnet, wenn der Druck im Kraftstofftank 1 zum Beispiel bei einem Anstieg der Umgebungstemperaturen oder während einer Nachheizphase nach dem Abstellen der Brennkraftmaschine aufgrund einer Verdunstung von Kraftstoff im Inneren des Kraftstofftanks 1 die Obergrenze des vorbestimmten Druckbereichs erreicht oder übersteigt. Der Öffnungsdruck des Unterdruckventils 10 entspricht der Untergrenze des vorbestimmten Druckbereichs, so dass sich das Unterdruckventil 10 selbsttätig öffnet, wenn zum Beispiel bei sinkenden Umgebungstemperaturen Kraftstoff im Inneren des Kraftstofftanks kondensiert und der Druck im Kraftstofftank 1 infolgedessen die Untergrenze des vorbestimmten Druckbereichs erreicht oder unterscheitet. Das bei geöffnetem Tankabsperrventil 8 bzw. bei geöffnetem Überdruckventil 9 aus dem Kraftstofftank 1 ausströmende Gasgemisch wird durch die Leitung 21 bzw. 21 und 28 zum Aktivkohlefilter 7 geleitet, um die im Gasgemisch enthaltenen flüchtigen Kohlenwasserstoffe (HC) zu adsorbieren, so dass nur gereinigte Luft in die Umgebung gelangt.

Bei dem in Fig. 2 dargestellten Kraftstofftank 1 bleibt hingegen das Tankabsperrventil 8 während des Betriebs der Brennkraftmaschine geschlossen und wird nur während des Betankens des Kraftstofftanks 1 geöffnet. Der Druck im Inneren des Kraftstofftanks 1 wird dort ausschließlich mit Hilfe der beiden mechanischen Tankdruckregelventile 9, 10 innerhalb eines vorbestimmten Druckbereichs gehalten. Dieser Druckbereich wird nach oben zu von einem durch die Auslegung des Überdruckventils 9 festgelegten Überdruck-Schwellenwert und nach unten von einem durch die Auslegung des Unterdruckventils 10 festgelegten Unterdruck-Schwellenwert begrenzt. Das Überdruckventil 9 öffnet sich selbsttätig, wenn der Druck im Kraftstofftank 1 den Überdruck-Schwellenwert erreicht oder übersteigt. Das Unterdruckventil 10 öffnet sich selbsttätig, wenn der Druck im Kraftstofftank 1 den Unterdruck-Schwellenwert erreicht oder unterschreitet. Der Druckbereich wird relativ schmal gehalten, so dass der Kraftstofftank 1 keinen Spitzenbelastungen ausgesetzt ist. Die vom Tankabsperrventil 8 zum Kraftstofftank führende Leitung 20 mündet hier statt in die Flüssigkeitsfalle 11 direkt in den Gas- oder Kopfraum 23 des Kraftstofftanks 1. Weil das Kraftfahrzeug beim Betanken stets auf einem ebenen Untergrund steht, kann bei diesem Kraftstofftank 1 bzw. dieser Betriebsweise auf mindestens eines der Roll-Over-Ventile 12, 13, 14 verzichtet werden, was in Fig. 2 durch das fehlende Roll-Over-Ventil 12 zwischen der Flüssigkeitsfalle 11 und dem Gas- oder Kopfraum 23 angedeutet ist.

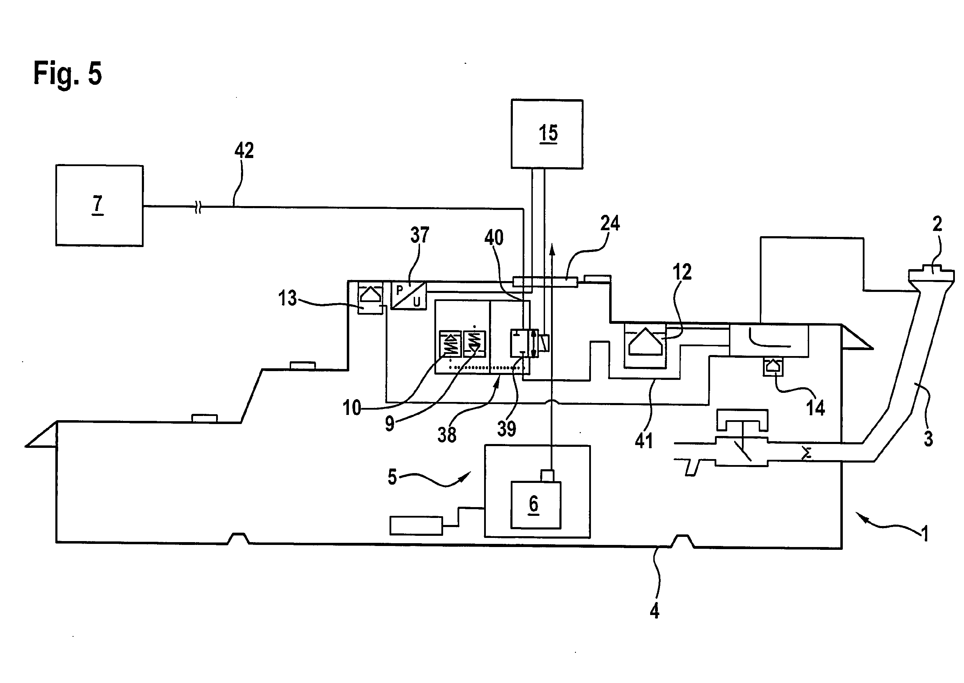

Bei dem in Fig. 5 dargestellten Kraftstofftank 1 ist das Tankabsperrventil 8 zusammen mit den beiden Tankdruckregelventilen 9 und 10 innerhalb des Kraftstofftanks 1 angeordnet. Das Tankabsperrventil 8 und die beiden Tankdruckregelventile 9 und 10 sind dort zu einer Ventileinheit oder Ventilbaugruppe 38 zusammengefasst, wobei die beiden Tankdruckregelventile 9, 10 als Bypass-Ventile in Parallelschaltung zum Tankabsperrventil 8 angeordnet sind. Die Ventileinheit oder Ventilbaugruppe 38 weist einen gemeinsamen Tankanschluss 39 und einen gemeinsamen Filteranschluss 40 auf. Der Tankanschluss 39 ist durch eine innerhalb des Kraftstofftanks 1 verlaufende Leitung 41 mit der Flüssigkeitsfalle 11 verbunden, während der Filteranschluss 40 durch eine aus dem Kraftstofftank 1 heraus führende Leitung 42 mit dem Aktivkohlefilter 7 verbunden ist

Wie zuvor beschrieben, kann das Tankabsperrventil 8 wahlweise nur bei der Betankung des Kraftstofftanks 1 geöffnet werden, indem die Druckregelung sowohl im Stillstand und im Betrieb der Brennkraftmaschine von den Tankdruckregelventilen 9 und 10 übernommen wird, oder das Tankabsperrventil 8 kann im Betrieb der Brennkraftmaschine auch zur Druckregelung eingesetzt werden.

Bei allen Kraftstofftanks 1 ist der Einfüllstutzen 3 durch eine On-Board-Diagnose-Leitung 43 mit der Flüssigkeitsfalle 11 verbunden, so dass das Fehlen des Tankdeckels 2 detektiert werden kann, um einen Druckausgleich und ein Entweichen von Kohlenwasserstoffen durch den Einfüllstutzen 3 zu verhindern. Da sich beim Fehlen des Tankdeckels 2 im Inneren des Kraftstofftanks 1 kein Über- oder Unterdruck einstellen kann, lässt sich das Fehlen des Tankdeckels 2 durch Auswertung der Signale des Tankdrucksensors 37 erfassen.

### BEZUGSZEICHENLISTE

- 1: Kraftstofftank
- 2: Tankdeckel
- 3: Einfüllstutzen
- 4: Boden
- 5: Fördereinheit
- 6: Kraftstoffpumpe
- 7: Aktivkohlefilter
- 8: Tankabsperrventil
- 9: Überdruckventil
- 10: Unterdruckventil
- 11: Flüssigkeitsfalle
- 12: Roll-Over-Ventil
- 13: Roll-Over-Ventil
- 14: Roll-Over-Ventil
- 15: Motorsteuergerät
- 16: Ventilteil Tankabsperrventil
- 17: Ventilbetätigungsteil Tankabsperrventil
- 18: Tankanschluss Tankabsperrventil
- 19: Filteranschluss Tankabsperrventil
- 20: Leitung
- 21: Leitung
- 22: Ventileinheit oder Ventilbaugruppe
- 23: Kopf- oder Gasraum
- 24: Verschlussdeckel
- 25: Tankanschluss Ventileinheit oder Ventilbaugruppe
- 26: Filteranschluss Ventileinheit oder Ventilbaugruppe
- 27: Leitung
- 28: Leitung
- 29: Membran
- 30: Kammer
- 31: Überdruckkammer
- 32: Unterdruckkammer
- 33: Kammer
- 34: Öffnung
- 35: Rohrstutzen
- 36: Feder
- 37: Tankdrucksensor
- 38: Ventileinheit oder Ventilbaugruppe
- 39: Tankanschluss Ventileinheit oder Ventilbaugruppe
- 40: Filteranschluss Ventileinheit oder Ventilbaugruppe
- 41: Leitung
- 42: Leitung
- 43: On-Board-Diagnose-Leitung

## Patentansprüche

1. Einrichtung zum Be- und Entlüften eines Kraftstofftanks einer Brennkraftmaschine, insbesondere eines Kraftstofftanks einer Brennkraftmaschine eines Kraftfahrzeugs, mit einem Aktivkohlefilter, einem steuerbaren Tankabsperrventil und zwei Tankdruckregelventilen, von denen eines im Falle eines Unterdrucks im Kraftstofftank und eines im Falle eines Überdrucks im Kraftstofftank öffnet, **dadurch gekennzeichnet, dass** mindestens die beiden Tankdruckregelventile (9, 10) im Inneren des Kraftstofftanks (1) angeordnet sind.

2. Einrichtung nach Anspruch 1, **dadurch gekennzeichnet, dass** der Aktivkohlefilter (7) und das Tankabsperrventil (8) außerhalb des Kraftstofftanks angeordnet sind und dass die beiden Tankdruckregelventile (9, 10) innerhalb des Kraftstofftanks (1) angeordnet sind.

3. Einrichtung nach Anspruch 2, **dadurch gekennzeichnet, dass** die beiden Tankdruckregelventile (9, 10) in Parallelschaltung zu einer Ventileinheit oder Ventilbaugruppe (22) mit einem gemeinsamen Tankanschluss (25) und einem gemeinsamen Filteranschluss (26) zusammengefasst sind.

4. Einrichtung nach Anspruch 2 oder 3, **gekennzeichnet durch** eine von den beiden Tankdruckregelventilen (9, 10) aus dem Kraftstofftank (1) heraus führende Leitung (28), die hinter dem Tankabsperrventil (8) in eine vom Tankabsperrventil (8) zum Aktivkohlefilter (7) führende Leitung (21) oder in den Aktivkohlefilter (7) mündet.

5. Einrichtung nach einem der vorangehenden Ansprüche, **dadurch gekennzeichnet, dass** die beiden Tankdruckregelventile (9, 10) oberhalb von einem höchsten Kraftstoffpegel in einem Gas- oder Kopfraum (23) des Kraftstofftanks (1) angeordnet sind.

6. Einrichtung nach Anspruch 5, **dadurch gekennzeichnet, dass** die beiden Tankdruckregelventile (9, 10) über eine Flüssigkeitsfalle (11) zum Abscheiden von flüssigem Kraftstoff mit dem Gas- oder Kopfraum (23) kommunizieren.

7. Einrichtung nach einem der Ansprüche 1 bis 6, **dadurch gekennzeichnet, dass** das Tankabsperrventil (1) durch eine Leitung (20) mit einem Kopf- oder Gasraum (23) des Kraftstofftanks (1) oder mit einer mit dem Kopf- oder Gasraum (23) kommunizierenden Flüssigkeitsfalle (11) zum Abscheiden von flüssigem Kraftstoff verbunden ist.

8. Einrichtung nach Anspruch 7, **dadurch gekennzeichnet, dass** zwischen dem Kopf- oder Gasraum (23) und der Leitung (20) kein Roll-Over-Ventil angeordnet ist.

9. Einrichtung nach Anspruch 1, **dadurch gekennzeichnet, dass** sowohl das Tankabsperrventil (8) und die beiden Tankdruckregelventile (9, 10) im Inneren des Kraftstofftanks (1) angeordnet sind.

10. Einrichtung nach Anspruch 9, **dadurch gekennzeichnet, dass** das Tankabsperrventil (8) und die beiden Tankdruckregelventile (9, 10) oberhalb von einem höchsten Kraftstoffpegel in einem Gas- oder Kopfraum (23) des Kraftstofftanks (1) angeordnet sind.

11. Einrichtung nach Anspruch 9 oder 10, **dadurch gekennzeichnet, dass** das Tankabsperrventil (8) und die beiden Tankdruckregelventile (9, 10) in Parallelschaltung zu einer Ventileinheit oder Ventilbaugruppe (38) mit einem gemeinsamen Tankanschluss (39) und einem gemeinsamen Filteranschluss (40) zusammengefasst sind.

12. Einrichtung nach Anspruch 11, **dadurch gekennzeichnet, dass** der Tankanschluss (38) durch eine innerhalb des Kraftstofftanks (1) angeordnete Leitung mit einer Flüssigkeitsfalle (11) zum Abscheiden von flüssigem Kraftstoff und durch eine aus dem Kraftstofftank (1) heraus führende Leitung mit dem außerhalb des Kraftstofftanks (1) angeordneten Aktivkohlefilter (7) verbunden ist.

13. Einrichtung nach Anspruch 6, 7 oder 12, **dadurch gekennzeichnet, dass** die Flüssigkeitsfalle (11) über mindestens ein Roll-Over-Ventil (12, 13, 14) mit dem Gas- oder Kopfraum (23) kommuniziert.

14. Einrichtung nach einem der vorangehenden Ansprüche, **dadurch gekennzeichnet, dass** im Betrieb der Brennkraftmaschine das Tankabsperrventil (8) geschlossen bleibt und der Duck im Kraftstofftank (1) nur mittels der beiden Tankdruckregelventile (9, 10) gesteuert wird.

15. Einrichtung nach einem der vorangehenden Ansprüche, **dadurch gekennzeichnet, dass** die beiden Tankdruckregelventile (9, 10) rein mechanische Ventile sind, die jeweils zwei durch eine Membran (29) getrennte Kammern (30, 31; 32, 33) aufweisen, und dass die Kammern (30, 31; 32, 33) jeweils paarweise mit dem Inneren des Kraftstofftanks (1) bzw. mit dem Aktivkohlefilter (7) kommunizieren.
